# EUROPÄISCHE PATENTSCHRIFT

(11) **EP 3 044 134 B1**
(45) Veröffentlichungstag und Bekanntmachung des Hinweises auf die Patenterteilung: **12.02.2020**
(21) Anmeldenummer: 14752825.1
(22) Anmeldetag: 13.08.2014
(51) Int. Cl.: B65G 37/02, B65G 54/02

(54) **VORRICHTUNG UND VERFAHREN ZUM TRANSPORT VON BEHÄLTERN IN EINER BEHÄLTERBEHANDLUNGSANLAGE**
DEVICE AND METHOD FOR TRANSPORTING CONTAINERS IN A CONTAINER TREATMENT SYSTEM
DISPOSITIF ET PROCÉDÉ DE TRANSPORT DE RÉCIPIENTS DANS UNE INSTALLATION DE TRAITEMENT DE RÉCIPIENTS

(30) Priorität: 13.09.2013 DE 102013218403
(43) Veröffentlichungstag der Anmeldung: 20.07.2016
(73) Patentinhaber: Krones AG, 93073 Neutraubling (DE)
(72) Erfinder: WALTER, Ralf, 93073 Neutraubling (DE); SENN, Konrad, 93073 Neutraubling (DE)
(74) Vertreter: Grünecker Patent- und Rechtsanwälte PartG mbB
(86) Internationale Anmeldenummer: PCT/EP2014/067300
(87) Internationale Veröffentlichungsnummer: WO 2015/036197

(56) Entgegenhaltungen:
- EP-A1- 1 645 340
- EP-A2- 2 088 026
- DE-A1- 4 133 114
- DE-A1- 4 244 351
- DE-A1-102010 018 153
- DE-A1-102010 045 661
- JP-A- H0 551 087
- JP-A- 2010 132 405
- US-A1- 2003 158 615
- US-A1- 2012 305 364
- US-B1- 6 692 196

## Beschreibung

### Gebiet der Erfindung

Die vorliegende Erfindung betrifft eine Vorrichtung und ein Verfahren zum Transport von Behältern, insbesondere von Flaschen oder Dosen, in einer Anlage zur Behandlung der Behälter.

### Stand der Technik

Bei Behälterbehandlungsanlagen werden Behälter, wie zum Beispiel Flaschen, Dosen oder ähnliche, in einem oder mehreren aufeinander folgenden Prozessschritten behandelt. Dabei werden im Allgemeinen die Prozessschritte bzw. Arbeitsschritte in separaten Behandlungseinheiten durchgeführt, die beispielsweise als Module eines gemeinsamen Anlagenkonzepts zusammengestellt werden können. Um Kosten für die Anschaffung und den Betrieb der Anlage zu reduzieren, werden üblicherweise Schnittstellen zur Steuerung der Anlage, zur Medienversorgung oder dergleichen vereinheitlicht, um die Kombination von Behandlungseinheiten unterschiedlicher Typen und/oder Produktionskapazitäten zu vereinfachen. Eine Behälterbehandlungsanlage für Kunststoffflaschen, beispielsweise aus Polyethylenterephthalat (PET), Polypropylen (PP) usw., kann beispielsweise eine Heizvorrichtung zum Erwärmen der Vorformlinge, eine Streckblasvorrichtung zum Expandieren und Strecken der Vorformlinge zu Kunststoffflaschen, eine Reinigungsvorrichtung, eine Etikettiervorrichtung, eine Füllvorrichtung, eine Sortiervorrichtung, eine Verpackungsvorrichtung, usw. als separate, modular ausgeführte Behandlungseinheiten umfassen. Die einzelnen Behandlungseinheiten, welche aufeinander folgende Prozessschritte durchführen, sind dabei im Stand der Technik im Allgemeinen in Reihe hintereinander geschaltet, wobei eine oder mehrere Transportvorrichtungen den Transport der Behälter von den Behandlungseinheiten zu den jeweiligen nachgeschalteten Behandlungseinheiten übernimmt.

Die Durchführung aufeinander folgender Prozessschritte durch die separaten Behandlungseinheiten der Anlage sowie der Transport zwischen den Behandlungseinheiten entspricht somit dem bekannten Prinzip der Fließbandverarbeitung, bei der ein kontinuierlicher Fluss von zu behandelnden Behältern durch die in Serie angeordneten Behandlungseinheiten mittels geeigneter Steuerungsprozesse bezüglich der Prozessdauer der einzelnen Prozessschritte und/oder der Menge der pro Zeiteinheit von einer Behandlungseinheit zur nächsten Behandlungseinheit transportierten Behälter erreicht wird. Bei den im Stand der Technik bekannten Anlagen wird der Transport der Behälter zwischen den Behandlungseinheiten vielfach mittels einer Vielzahl separater Transportelemente in Form von Trägern realisiert, welche die Behälter oder Vorformlinge mittels geeigneter Haltevorrichtungen, zum Beispiel speziell geformter Greifeinheiten, bei einer Aufnahmestelle aufnehmen, durch die Reihe der aufeinander folgenden Behandlungseinheiten transportieren und schließlich an einer Abgabestelle abgeben. Um die Transportelemente anschließend wieder verwenden zu können, müssen sie mittels einer geeigneten separaten Transportvorrichtung wieder zur Aufnahmestelle zurückgeführt werden. Dabei bleiben die Transportelemente auf der, je nach Umfang und Ausgestaltung der Behälterbehandlungsanlage relativ langen, Rückführstrecke ungenutzt. Zusätzlich zur prozesstechnisch ungenutzten Rückführstrecke muss außerdem die Gesamtzahl der Transportelemente entsprechend der Länge der Rückführstrecke erhöht werden, um eine ausreichende Dichte an Transportelementen in der aus den Behandlungseinheiten gebildeten Prozessstrecke garantieren zu können. Aufgrund der Anordnung der einzelnen Behandlungseinheiten in Reihe entlang der Prozessstrecke führt bereits der Ausfall einer einzigen Behandlungseinheit, zum Beispiel in Folge einer notwendigen Instandhaltungsmaßnahme, zum Stillstand der gesamten Anlage. Darüber hinaus bestimmt diejenige Behandlungseinheit mit dem geringsten Durchsatz an Behältern pro Zeiteinheit den maximal erreichbaren Durchsatz der gesamten Anlage. Des Weiteren ist im Stand der Technik für Behälterbehandlungsanlagen lediglich ein Gesamtschutzbereich definiert, so dass die gesamte Anlage bereits dann aus Sicherheitsgründen abgeschaltet werden muss, wenn eine einzige Behandlungseinheit gewartet und/oder repariert werden soll. Dabei geht wertvolle Produktionszeit verloren. DE 10 2010 045 661 A1 beschreibt eine Behälterbehandlungsanlage nach dem Oberbegriff des Anspruchs 1.

Es liegt somit der vorliegenden Erfindung die Aufgabe zugrunde, ein verbessertes Transportsystem zum Transport von Behältern in einer Behälterbehandlungsanlage zur Verfügung zu stellen, das die oben genannten Nachteile überwindet und insbesondere eine kontinuierliche Produktion selbst bei Ausfall einzelner Behandlungseinheiten zu garantieren vermag. Ganz allgemein besteht die Aufgabe, ein effizientes und fehlertolerantes Transportsystem zur Verfügung zu stellen.

### Beschreibung der Erfindung

Die oben genannte Aufgabe wird gelöst durch eine Behälterbehandlungsanlage nach Anspruch 1 mit eine Transporteinrichtung zum Transport von Behältern in einer Behälterbehandlungsanlage, die eine erste Behälterbehandlungseinheit für einen Prozessschritt und eine zweite Behälterbehandlungseinheit für den Prozessschritt aufweist, mit mindestens einer Aufnahmestelle für Behälter,
mindestens einer Abgabestelle für Behälter,
einer Transportbahn, welche die mindestens eine Aufnahmestelle, die mindestens eine Abgabestelle, die erste Behälterbehandlungseinheit und die zweite Behälterbehandlungseinheit verbindet, und
mindestens ein Transportelement zum Transportieren mindestens eines Behälters, das an der Transportbahn bewegbar angeordnet ist,
wobei die Transportbahn und das mindestens eine Transportelement derart ausgestaltet sind, dass das mindestens eine Transportelement einzeln steuerbar von einer Aufnahmestelle zu einer Abgabestelle geleitet werden kann.

Unter Transporteinrichtungen werden hier und im Folgenden Fördereinrichtungen verstanden, die für die Behälter Transportelemente aufweisen, welche in einem geschlossenen Kreislauf gefördert werden. Dies schließt jedoch nicht aus, dass zumindest Teilstrecken der Transporteinrichtung keinen geschlossenen Kreislauf bilden.

Behälter im Sinne der Erfindung sind insbesondere Getränkeflaschen, aber auch andere Behälter für Lebensmittel, Medikamente, Hygieneartikel, Reinigungsmittel oder dergleichen, wie zum Beispiel Dosen, Glasflaschen oder andere Glasbehälter mit Deckel, Verpackungen auf der Basis von Karton oder Verbundstoffen, Tetrapack, oder ähnliches. Ebenso sind bei Behältern aus Kunststoff auch Zwischenprodukte, insbesondere Vorformlinge zum Streckblasen der Behälter umfasst. Des Weiteren sind unter Behältern im Sinne der Erfindung auch zusammengestellte Gebinde mit mehreren Behältern zu verstehen.

Bei der ersten Behälterbehandlungseinheit und der zweiten Behälterbehandlungseinheit kann es sich um eine Heizvorrichtung zum Erwärmen von Vorformlingen, eine Streckblasvorrichtung zur Herstellung von Kunststoffbehältern mittels eines Streckblasvorgangs, eine Reinigungsvorrichtung, eine Etikettiervorrichtung, eine Füllvorrichtung, eine Sortiervorrichtung, eine Verpackungsvorrichtung, eine Sterilisationsvorrichtung, eine Inspektionsvorrichtung, eine Temperiervorrichtung, eine Kühlvorrichtung, eine Beschichtungsvorrichtung, eine Puffervorrichtung, usw. oder eine Kombination mehrerer der genannten Vorrichtungen handeln. Gemäß der Erfindung führt jedoch die erste Behälterbehandlungseinheit denselben Prozessschritt durch wie die zweite Behälterbehandlungseinheit, wobei der durchgeführte Prozessschritt, insbesondere bei Ausgestaltung der Behälterbehandlungseinheiten als Kombination mehrerer Vorrichtungen, auch aus einer Abfolge von Prozessschritten bestehen kann. Die erste und die zweite Behälterbehandlungseinheit können jeweils als modulare Behandlungseinheit ausgeführt sein, welche einzeln ausgetauscht werden kann. Dadurch ergibt sich ein flexibles Anlagenkonzept, mit welchem sich unterschiedliche Produkte bzw. Behälter mit bestmöglicher Kapazitätsauslastung auch bei häufigen Produktwechseln herstellen lassen. Ebenso lassen sich Produktionsunterbrechungen bei Produktwechseln minimieren.

Obwohl die erste Behälterbehandlungseinheit und die zweite Behälterbehandlungseinheit denselben Prozessschritt bzw. Arbeitsschritt durchführen, können die erste und die zweite Behälterbehandlungseinheit unterschiedlich ausgeführt sein. Insbesondere können eine Prozessdauer und/oder ein Durchsatz an Behältern pro Zeiteinheit der ersten Behälterbehandlungseinheit verschieden von einer Prozessdauer bzw. einem Durchsatz der zweiten Behälterbehandlungseinheit sein.

Es versteht sich, dass die vorliegende Erfindung auch Behälterbehandlungsanlagen mit mehr als zwei Behälterbehandlungseinheiten, von welchen jede denselben Prozessschritt durchführt, umfasst. Durch Verwendung zweier oder mehrerer Behälterbehandlungseinheiten, von welchen jede denselben Prozessschritt durchführt, wird eine homogene oder diversitäre Redundanz der Behälterbehandlungsanlage erzielt, wodurch die Behälterbehandlungsanlage fehlertolerant bezüglich des entsprechenden Prozessschrittes betrieben werden kann.

Erfindungsgemäß umfasst die Transporteinrichtung mindestens eine Aufnahmestelle für Behälter und mindestens eine Abgabestelle für Behälter. Dabei kann die Anzahl der Aufnahmestellen verschieden von der Anzahl der Abgabestellen sein. An einer Aufnahmestelle werden die Behälter von einem Zuförderer an die weiter unten beschriebenen Transportelemente übergeben. Im Allgemeinen nimmt dabei ein Transportelement genau einen Behälter auf. In speziellen Ausführungsformen können jedoch einzelne oder auch alle Transportelemente dergestalt ausgebildet sein, dass sie mehr als einen Behälter aufnehmen können. Zu jeder Aufnahmestelle ist im Allgemeinen je ein Zuförderer vorgesehen. Der Zuförderer kann dabei insbesondere als Transferstern in der Form eines Sternrads oder als Förderband ausgebildet sein. Da die Transportelemente einzeln gesteuert werden können, kann einerseits die Geschwindigkeit eines einen Behälter aufnehmenden Transportelements einer Rotations- bzw. Fördergeschwindigkeit des Zuförderers angepasst werden, andererseits kann die Anzahl der pro Zeiteinheit zu der Aufnahmestelle geleiteten Transportelemente in Abhängigkeit von der jeweils aktuellen Zufördermenge an Behältern geregelt werden.

An einer Abgabestelle werden die Behälter von den Transportelementen an einen Abförderer übergeben. Der Abförderer kann dabei wie der Zuförderer insbesondere als Transferstern in der Form eines Sternrads oder als Förderband ausgebildet sein. In der einfachen Ausführung kann die Transporteinrichtung derart ausgebildet sein, dass alle Behälter, die von den Transportelementen an einer bestimmten Aufnahmestelle aufgenommen werden, nach ihrer Behandlung durch die erste Behälterbehandlungseinheit oder die zweite Behälterbehandlungseinheit an einer Abgabestelle wieder übergeben werden. Die vorliegende Erfindung bezieht sich jedoch auch auf deutlich komplexere Anordnungen, bei denen beispielsweise die Behälter nach der Behandlung in der ersten Behälterbehandlungseinheit oder der zweiten Behälterbehandlungseinheit weiteren Prozessschritten in weiteren Behälterbehandlungseinheiten unterworfen werden können und/oder einzelne Behälter in Abhängigkeit ihres Behandlungszustandes, zum Beispiel als Ausschuss, ausgeschleust, erneut der ersten oder zweiten Behälterbehandlungseinheit oder einer alternativen Abgabestelle zugeführt werden können.

Erfindungsgemäß verbindet die Transportbahn der Transporteinrichtung mindestens eine Aufnahmestelle, mindestens eine Abgabestelle, die erste Behälterbehandlungseinheit und die zweite Behälterbehandlungseinheit. Dabei können die mindestens eine Aufnahmestelle und die mindestens eine Abgabestelle als Endpunkte einer Prozessstrecke angesehen werden, entlang welcher die erste Behälterbehandlungseinheit und die zweite Behälterbehandlungseinheit angeordnet sind. Erfindungsgemäß können die erste Behälterbehandlungseinheit und die zweite Behälterbehandlungseinheit auf verschiedenste Weisen angeordnet sein (siehe unten).

Die Transporteinrichtung umfasst erfindungsgemäß weiterhin mindestens ein Transportelement zum Transportieren eines oder mehrerer Behälter, das an der Transportbahn bewegbar angeordnet ist. Insbesondere kann die Transporteinrichtung eine Vielzahl von gleich gestalteten Transportelementen umfassen, welche einzeln und unabhängig voneinander entlang der Transportbahn bewegt werden können. Die Anzahl der Transportelemente an der Transportbahn ist dabei prinzipiell beliebig und lediglich durch die Länge der Transportbahn begrenzt, solange nur mindestens ein Transportelement vorhanden ist. Zur Aufnahme des mindestens einen Behälters an einer Aufnahmestelle und zur Abgabe der Behälter an einer Abgabestelle kann das mindestens eine Transportelement mit einer geeigneten Halteeinrichtung, zum Beispiel in Form eines Greifelements, ausgestaltet sein. Das Greifelement kann dabei passiv oder aktiv steuerbar ausgebildet sein. Insbesondere sind Greifelemente zum formschlüssigen oder kraftschlüssigen Greifen eines Halsbereichs der Behälter, zum Beispiel beim sogenannten Neckhandling von Kunststoffflaschen, vorstellbar, wobei der gehaltene Behälter beim formschlüssigen Greifen um seine Längsachse in dem Greifelement drehbar gelagert ist. Zudem kann das Greifelement schwenkbar und/oder höhenverstellbar ausgebildet sein.

Das mindestens eine Transportelement kann als Läufer, Puck, Schlitten, Shuttle oder dergleichen ausgebildet sein, welcher durch geeignete Wechselwirkung mit der Transportbahn bewegt wird. Das Transportelement kann dabei je nach Bedarf an der Transportbahn beschleunigt, abgebremst oder auch zeitweise ganz angehalten werden. Durch individuelles Steuern des Transportelements lässt sich somit ein variables Weg-Zeit-Profil des Transportelements realisieren. Des Weiteren kann das mindestens eine Transportelement eine eindeutige Identifikationseinheit, zum Beispiel in der Form eines Strichcodes, auslesbaren Speicherchips, eines aufgedruckten, aufgeklebten und/oder eingravierten alphanumerischen Codes, etc., umfassen, wobei durch eine oder mehrere geeignete Identifikationserfassungsvorrichtungen entlang der Transportbahn eine Identifikation des Transportelements, welches die entsprechende Identifikationserfassungsvorrichtung passiert, ermöglicht wird. Die Identifikationseinheit des Transportelements kann insbesondere zum gezielten Leiten des Transportelements, zum Beispiel zu einer bestimmten Abgabestelle, eingesetzt werden.

Die Form der Transportbahn ist grundsätzlich beliebig. Insbesondere kann die Transportbahn im Wesentlichen geschlossen sein, wobei im Wesentlichen geschlossen bedeutet, dass die Transportbahn mindestens einen geschlossenen Weg für die Transportelemente ermöglicht. Erfindungsgemäß wird dies durch Bereitstellen einer Rückführstrecke als Teil der Transportbahn realisiert, wobei die Rückführstrecke ein Rückführen des mindestens einen Transportelements von der mindestens einen Abgabestelle zu der mindestens einen Aufnahmestelle ermöglicht. Die Transportbahn kann jedoch auch zumindest teilweise offen ausgestaltet sein, in derart dass wenigstens eine Teilstrecke der Transportbahn als Sackgasse für das mindestens eine Transportelement ausgeführt ist, wobei eine Rückführung des mindestens einen Transportelements durch Umkehr der Bewegungsrichtung ermöglicht werden kann. Insbesondere kann eine derartige Sackgasse an einer der Abgabestellen enden.

Zum Führen des mindestens einen Transportelements entlang der Transportbahn kann die Transportbahn eine Führungsschiene und/oder einen Führungskanal aufweisen. Dementsprechend kann das mindestens eine Transportelement einen komplementären Führungskanal, ein komplementäres Führungselement, zum Beispiel einen Führungsstift, und/oder eine oder mehrere geeignet angeordnete Führungsrollen aufweisen, welche zum Beispiel mittels eines Spurkranzes auf der Führungsschiene der Transportbahn laufen. Eine Vielzahl alternativer Ausführungsformen, zum Beispiel mittels Gleitlager, ist hierbei vorstellbar. Durch das Bereitstellen einer Führungsschiene auf der Transportbahn kann ein reibungsarmes Leiten des mindestens einen Transportelements entlang der Transportbahn ermöglicht werden. Darüber hinaus kann die Transportbahn über eine Lauffläche verfügen, auf welcher entsprechende Stützelemente, zum Beispiel Stützrollen, abrollen bzw. gleiten können. Weiterhin kann die Transportbahn mindestens einen Sensor zur Bestimmung der Position des mindestens einen Transportelements entlang der Transportbahn umfassen. Insbesondere kann durch regelmäßige und periodische Anordnung von Sensoren entlang zumindest eines Teilstücks der Transportbahn die Position eines Transportelements auf diesem Teilstück der Transportbahn bestimmt werden. Dabei kann der Sensor als optischer Sensor, elektrischer Sensor, elektromagnetischer Sensor oder mechanischer Sensor ausgebildet sein, wobei zum Beispiel durch Messen einer Lichtreflektion an einem geeigneten Reflektorelement des Transportelements, durch Induktion eines elektromagnetischen Signals aufgrund der Bewegung des Transportelements, durch Änderung des elektrischen Widerstandes des Sensors unter Ausnutzung eines magnetoresistiven Effektes, zum Beispiel aufgrund einer durch die Bewegung des ein magnetisches Referenzelement umfassenden Transportelements verursachten magnetischen Flussänderung, oder durch lokale Druckmessung aufgrund des Gewichts des Transportelements die Position des Transportelements im Bereich des Sensors bestimmt werden. Alternativ oder zusätzlich kann das mindestens eine Transportelement eine Signaleinheit aufweisen, welche ein Positionssignal erzeugt. Das Positionssignal kann dann durch geeignete Detektoren im Bereich der Transporteinrichtung lokalisiert werden, um die Position des Transportelements entlang der Transportbahn zu bestimmen. Die Signaleinheit des Transportelements kann insbesondere als RFID-Chip ausgebildet sein. Erfindungsgemäß sind die Transportbahn und das mindestens eine Transportelement derart ausgestaltet, dass das mindestens eine Transportelement einzeln steuerbar von einer Aufnahmestelle zu einer Abgabestelle geleitet werden kann. Dies bedeutet, dass das mindestens eine Transportelement mindestens ein Reaktionselement aufweist, welches mittels mechanischer und/oder elektromagnetischer Wechselwirkung mit entlang der Transportbahn angeordneten Wechselwirkungselementen eine Kraft erfährt, durch welche das Transportelement beschleunigt und somit bewegt werden kann. Durch gezieltes Ansteuern des Reaktionselements eines bestimmten Transportelements und/oder eines oder mehrerer Wechselwirkungselemente in einem begrenzten Bereich der Transportbahn kann diese Kraftausübung auf ein bestimmtes Transportelement beschränkt werden, wodurch das Transportelement einzeln und unabhängig von anderen Transportelementen entlang der Transportbahn geleitet werden kann.

Erfindungsgemäß umfasst die Transporteinrichtung eine erste Aufnahmestelle und eine zweite Aufnahmestelle, sowie eine erste Abgabestelle und eine zweite Abgabestelle, wobei die Transportbahn die erste Behälterbehandlungseinheit und die zweite Behälterbehandlungseinheit in Serie verbindet, und
wobei die Transportbahn umfasst:
eine erste Prozessstrecke, welche die erste Aufnahmestelle über die erste Behälterbehandlungseinheit mit der ersten Abgabestelle verbindet, und
eine Rückführstrecke für das Transportelement,
wobei zumindest ein Teil der Rückführstrecke als eine zweite Prozessstrecke ausgebildet ist, welche die zweite Aufnahmestelle über die zweite Behälterbehandlungseinheit mit der zweiten Abgabestelle verbindet.

Die Transportbahn ist somit im Wesentlichen geschlossen, wobei die Rückführstrecke für das Transportelement die erste Abgabestelle mit der ersten Aufnahmestelle verbindet. Zumindest als Teil der Rückführstrecke wird erfindungsgemäß eine zweite Prozessstrecke zur Verfügung gestellt, an welcher mittels der zweiten Behälterbehandlungseinheit der oben beschriebene Prozessschritt an den Behältern durchgeführt werden kann. Dazu verbindet die zweite Prozessstrecke eine weitere, zweite Aufnahmestelle über die zweite Behälterbehandlungseinheit mit einer weiteren, zweiten Abgabestelle. Dabei bedeutet Verbinden über eine Behälterbehandlungseinheit hier und im folgenden, dass ein Teil der Transportbahn derart durch die jeweilige Behälterbehandlungseinheit hindurch oder an dieser vorbei verläuft, dass der entsprechende Prozessschritt von der Behälterbehandlungseinheit an mittels der Transportelemente transportierten Behältern durchgeführt werden kann. Dazu ist es auch möglich, dass ein von einem Transportelement zur Behälterbehandlungseinheit transportierte Behälter vorübergehend an die Behälterbehandlungseinheit übergeben werden kann, um nach Durchführung des Prozessschrittes an dasselbe oder ein anderes Transportelement zurückgegeben zu werden.

Erfindungsgemäß verbindet die Transportbahn die erste Behälterbehandlungseinheit und die zweite Behälterbehandlungseinheit in Serie, so dass Transportelemente, welche auf einem geschlossenen Weg entlang der Transportbahn bewegt werden, ohne Umkehrung der Bewegungsrichtung sowohl die erste als auch die zweite Behälterbehandlungseinheit passieren können. Somit weist die Transportbahn einen geschlossenen Weg auf, entlang dessen ein Transportelement nacheinander die erste Aufnahmestelle, die erste Behälterbehandlungseinheit, die erste Abgabestelle, die zweite Aufnahmestelle, die zweite Behälterbehandlungseinheit und die zweite Abgabestelle passiert. Dabei kann die Behälterbehandlungsanlage derart ausgeführt sein, dass Behälter im gleichen Bearbeitungszustand durch Zuförderer an der ersten und der zweiten Aufnahmestelle an die Transportelemente übergeben werden und in der ersten bzw. zweiten Behälterbehandlungseinheit demselben Prozessschritt unterworfen werden, um anschließend in dem neuen Behandlungszustand an der ersten bzw. zweiten Abgabestelle wieder abgefördert werden. Durch Einsatz identischer Behälterbehandlungseinheiten für die erste und die zweite Behälterbehandlungseinheit, insbesondere im Hinblick auf deren Prozessdauer und/oder Durchsatz an Behältern pro Zeiteinheit, kann somit entlang der Rückführstrecke eine der ersten Prozessstrecke äquivalente zweite Prozessstrecke ausgebildet werden, welche den Gesamtdurchsatz der Behälterbehandlungsanlage verdoppelt. Dadurch wird der notwendige Rücktransport der Transportelemente von der ersten Abgabestelle zu der ersten Aufnahmestelle durch die zweite Prozessstrecke ersetzt, deren Rückführstrecke ebenfalls durch die erste Prozessstrecke ersetzt wird. Hierdurch kann die Anzahl der in der Transporteinrichtung eingesetzten Transportelemente gegenüber dem Bereitstellen zweier separater Transporteinrichtungen für jeweils eine einzige Prozessstrecke erheblich reduziert werden, wodurch Installationskosten und Betriebskosten eingespart werden. Somit werden die eingesetzten Transportelemente besser ausgenutzt und es kann Transportstrecke eingespart werden.

Gemäß einer weiteren Weiterbildung kann die Transportbahn weiterhin eine Ausgleichsstrecke umfassen, welche die erste Abgabestelle mit der ersten Aufnahmestelle und/oder die zweite Abgabestelle mit der zweiten Aufnahmestelle verbindet. Die dazu benötigten Verbindungen können durch Einsatz zweier oder mehrerer Weichen für die Transportbahn realisiert werden. Die Stellung einer Weiche kann dabei mittels einer Weichensteuereinheit in Abhängigkeit des Betriebszustandes der ersten und/oder zweiten Behälterbehandlungseinheit und/oder der gemessenen Position eines oder mehrerer Transportelemente entlang der Transportbahn gesteuert werden. Insbesondere kann die Weiche bei Ausfall einer der beiden Behälterbehandlungseinheiten derart gestellt werden, dass Transportelemente über die Ausgleichsstrecke an der entsprechenden Behälterbehandlungseinheit vorbei geführt werden. Die Ausgleichsstrecke schließt dabei die verbleibende funktionierende Prozessstrecke kurz, so dass trotz Ausfall einer Behälterbehandlungseinheit die gesamte Behälterbehandlungsanlage, zwar mit reduziertem Durchsatz, weiter betrieben werden kann.

Zudem kann jede Weiche zeitabhängig derart geschaltet werden, dass der Fluss an Transportelementen entlang der beiden Prozessstrecken der jeweiligen Prozessdauer und/oder dem jeweiligen Durchsatz der jeweiligen Behälterbehandlungseinheit angepasst werden kann. Insbesondere können die Transportelemente und die Weichen der Transporteinrichtung von einer zentralen Steuereinheit derart gesteuert werden, dass ein Rückstau vor einer Behälterbehandlungseinheit mit einem geringeren Durchsatz bzw. ein Leerlaufen einer Behälterbehandlungseinheit mit einem höheren Durchsatz vermieden werden kann.

Um nicht nur vorgegebene Unterschiede beim Durchsatz der beiden Behälterbehandlungseinheiten ausgleichen zu können, sondern auch den Ausfall einer jeden Behälterbehandlungseinheit kompensieren zu können, kann zumindest ein Teil der Ausgleichsstrecke derart ausgebildet sein, dass das Transportelement in beide Richtungen geführt werden kann. Zu diesem Zweck kann die Transportbahn mindestens sechs Weichen aufweisen: Zwei zum Ausschleusen von Transportelementen aus dem von den beiden Prozessstrecken gebildetem Hauptkreis in die Ausgleichsstrecke, zwei zum wieder Einleiten von Transportelementen von der Ausgleichsstrecke in den Hauptkreis und zwei Weichen, welche die jeweilige Aus- und Einleitstrecke mit dem Teil der Ausgleichsstrecke verbinden, welcher ein Führen der Transportelemente in beide Richtungen ermöglicht. Durch das Verwenden einer derartigen, in beide Richtungen betreibbaren Ausgleichsstrecke kann ein separates Ausbilden einer Ausgleichsstrecke für jede der beiden Prozessstrecken vermieden werden. In der beschriebenen Konfiguration kann somit die gesamte Behälterbehandlungsanlage fehlertolerant bezüglich des Ausfalls einer Behälterbehandlungseinheit betrieben werden.

In einer weiteren Ausführung sind die erste und die zweite Behälterbehandlungseinheit derart geschaltet, dass das Transportelement wahlweise der ersten oder der zweiten Behälterbehandlungseinheit zugeführt werden kann,
wobei die Transportbahn umfasst:
eine erste Transportstrecke, welche die mindestens eine Aufnahmestelle über eine erste Weiche mit der ersten und der zweiten Behälterbehandlungseinheit verbindet, und
eine Rückführstrecke für das Transportelement.

Die Anordnung der ersten und der zweiten Behälterbehandlungseinheit entspricht demnach einer Parallelschaltung, wobei ein Transportelement durch Steuern der Stellung der ersten Weiche wahlweise der ersten oder der zweiten Behälterbehandlungseinheit zugeführt wird. Wie bereits oben beschrieben kann dabei die Stellung der ersten Weiche in Abhängigkeit einer Prozessdauer und/oder eines Durchsatzes der ersten und/oder der zweiten Behälterbehandlungseinheit und/oder einer Position eines oder mehrerer Transportelemente entlang der Transportbahn bzw. einer daraus bestimmten Dichte an Transportelementen in einem Abschnitt der Transportbahn geregelt werden. Das Rückführen der Transportelemente von der ersten bzw. zweiten Behälterbehandlungseinheit kann über eine gemeinsame Rückführstrecke mit mindestens einer weiteren Weiche oder über getrennte Rückführstrecken erfolgen. Dabei können die behandelten Behälter an einer gemeinsamen Abgabestelle der gemeinsamen Rückführstrecke oder an separaten Abgabestellen der separaten Rückführstrecken abgefördert werden. Alternativ ist auch eine Übergabe des Behälters von dem Transportelement an die jeweilige Behälterbehandlungseinheit denkbar, wobei der behandelte Behälter anschließend von einer weiteren Transporteinrichtung aufgenommen und zu weiteren Behälterbehandlungseinheiten und/oder Abförderern transportiert wird. Wie bei der oben beschriebenen Serienschaltung lässt sich auch bei dieser Weiterbildung durch Regeln der Stellung der ersten Weiche eine Fehlertoleranz der gesamten Behälterbehandlungsanlage erzielen, in dem die erste Weiche bei Ausfall einer Behälterbehandlungseinheit derart eingestellt wird, dass die Transportelemente zu der anderen, noch funktionierenden Behälterbehandlungseinheit geführt werden.

Gemäß einer weiteren Weiterbildung kann die Transportbahn weiterhin eine zweite Transportstrecke umfassen, welche die erste und die zweite Behälterbehandlungseinheit über eine zweite Weiche mit der mindestens einen Abgabestelle verbindet. Die zweite Weiche führt somit die von der ersten und der zweiten Behälterbehandlungseinheit kommenden Ströme an Transportelementen wieder zusammen und leitet den Gesamtstrom über die zweite Transportstrecke zu der mindestens einen Abgabestelle weiter. Insbesondere kann bei dieser Konfiguration jedes Transportelement wahlweise über die erste Weiche, die erste Behälterbehandlungseinheit und die zweite Weiche zur Abgabestelle oder über die erste Weiche, die zweite Behälterbehandlungseinheit und die zweite Weiche zu der Abgabestelle geführt werden.

In den oben beschriebenen Weiterbildungen für die erfindungsgemäße Transporteinrichtung kann die erste Behälterbehandlungseinheit einen ersten Schutzbereich aufweisen und die zweite Behälterbehandlungseinheit einen zweiten, von dem ersten getrennten Schutzbereich aufweisen. Der Schutzbereich einer Maschine bezeichnet hier und im Folgenden den Gefahrenbereich rund um die Maschine, in welchem durch elektrischen Schlag, gefährliche aktive oder bewegte Teile der Maschine, hohe oder sehr niedrige Temperaturen, toxische Materialien, elektromagnetische Strahlung, ionisierende Strahlung oder ähnliche gefährliche Elemente Gefahr für das Betreiberpersonal bei laufender Maschine besteht. Zur Wartung, Fehlerbehebung, Programmierung und Ausführung von Tests jedoch kann es erforderlich sein, dass Personal den Maschinenschutzbereich betreten muss. Um die Gefährdung des Personals zu reduzieren weist ein Maschinenschutzbereich daher entsprechende Vorrichtungen zum Reduzieren der Energiezufuhr der Maschine auf ein sicheres Maß, zum Beispiel in der Art eines elektrischen Berührungsschutzes, auf, welche vom Personal bei Bedarf aktiviert werden können. Ein Schutzbereich einer Maschine kann insbesondere durch eine Einhausung der Maschine definiert werden, wobei die Einhausung einen Schutz vor Eingriff durch das Bedienungspersonal in den Maschinenbereich gewährleistet. Die Schutzbereiche können für die oben genannten Wartungsarbeiten generell zugänglich ausgebildet sein. Der Zugang kann dabei über einen entsprechend der Art des erforderlichen Zugangs ausgebildeten Einlass, zum Beispiel in Form einer Schutztür, einer Schutzklappe, eines Schutzfensters oder dergleichen erfolgen. Des Weiteren kann der Einlass mit einem Sensorelement oder Schaltelement versehen sein, welches das Öffnen des Einlasses registriert und als Konsequenz über eine automatische Abschaltvorrichtung den Antrieb bzw. die Antriebsversorgung der Maschine abschaltet. Dadurch kann einem etwaigen Verletzungsrisiko des Bedienungspersonals effektiv vorgebeugt werden.

Um bei anstehender Wartung, Fehlerbehebung oder Anpassung einer einzelnen Behälterbehandlungseinheit nicht die gesamte Behälterbehandlungsanlage anhalten zu müssen, sieht die erfindungsgemäße Vorrichtung getrennte Schutzbereiche für jede Behälterbehandlungseinheit vor. Dadurch und durch das oben beschriebene individuelle Steuern der Transportelemente und der Weichen wird es somit möglich, an einer Behälterbehandlungseinheit Instandhaltungsmaßnahmen durchzuführen, während die Behälterbehandlungsanlage als ganzes mittels der verbleibenden Behälterbehandlungseinheiten weiter produziert. Dadurch erhöht sich der Wirkungsgrad der gesamten Anlage und unnötige Stillstände können vermieden werden. Insbesondere kann ein dem Schutzbereich entsprechendes Teilstück der Transporteinrichtung vor der Wartung durch gezieltes Ansteuern der darin befindlichen Transportelemente leergefahren werden.

Gemäß einer Weiterbildung können das Transportelement und zumindest ein Teil der Transportbahn derart ausgebildet sein, dass das Transportelement im Bereich des Teils der Transportbahn mittels einer magnetischen Kraft, vorzugsweise in Wechselwirkung mit der Transportbahn, bewegt werden kann. Der entsprechende Teil der Transportbahn kann insbesondere mit einem magnetischen Linearantrieb, zum Beispiel in Form eines asynchronen Linearmotors, ausgestattet sein. Dazu wird der entsprechende Abschnitt der Transportbahn mit einer Vielzahl von elektrischen Wicklungen in Form von einzeln ansteuerbaren Elektromagneten ausgerüstet. Um eine magnetische Wechselwirkung zwischen dem Transportelement und den einzeln ansteuerbaren Elektromagneten der Transportbahn zu erzeugen, kann das Transportelement mit einem oder mehreren Permanentmagneten bzw. nicht schaltenden Elektromagneten oder Eisenkernen ausgestattet werden. In dieser Ausführung ist das Transportelement als ein passives Transportelement ausgeführt, welches durch Wechselwirkung mit den von den einzeln ansteuerbaren Elektromagneten der Transportbahn erzeugten elektromagnetischen Wechselfeldern bewegt wird. Der mindestens eine Permanentmagnet bzw. nicht schaltende Elektromagnet bzw. Eisenkern des Transportelements bildet somit das oben erwähnte Reaktionselement, während die einzeln ansteuerbaren Elektromagnete der Transportbahn die oben erwähnten Wechselwirkungselemente bilden. Bevorzugt ist bei Verwendung von passiven Transportelementen eine Lokalisierungseinheit an der Transportbahn angebracht, um die Lage wenigstens eines Transportelements und bevorzugt aller Transportelemente zu ermitteln und an eine Steuerung der Elektromagnete der Transportbahn weiterzugeben. Die Lokalisierungseinheit kann insbesondere durch die oben beschriebenen Sensoren realisiert werden. Die Stromstärke durch die elektrischen Wicklungen der Transportbahn kann von der Steuerung in Abhängigkeit von einem Kraftbedarf des zu bewegenden Transportelements automatisch angepasst werden. Durch individuelles Regeln der Stromstärke durch einzelne Wicklungen der Transportbahn kann das Transportelement außerdem beschleunigt, abgebremst oder mit einer konstanten vorgegebenen Geschwindigkeit bewegt werden.

Bei einer alternativen Ausführungsform ist das Transportelement als aktives Transportelement mit elektrischen Wicklungen versehen, welche die für den Antrieb notwendigen magnetischen Wechselfelder aufbringen können. Entsprechend wird der Abschnitt der Transportbahn mit Permanentmagneten bzw. nicht schaltenden Elektromagneten versehen. Hierbei kann sowohl die für den Antrieb nötige elektrische Energie als auch für die Steuerung nötige Signale via Induktionsübertragung auf die einzelnen Transportelemente übertragen werden. Die Steuerung kann sich demnach dezentral auf den einzelnen Transportelementen befinden oder auch zentral in einer eigenen Steuereinheit untergebracht sein. Alternativ dazu kann die nötige elektrische Energie über eine entlang der Transportbahn angeordnete Leitung auf die Transportelemente übertragen werden. Des Weiteren ist eine Kombination einer Ausführung des Transportelements als aktives Transportelement mit einer Transportbahn mit einzeln ansteuerbaren Elektromagneten denkbar.

Neben dem oben beschriebenen, als Magnettrasse ausgebildeten Teil der Transportbahn kann die Transportbahn weiterhin wenigstens eine Teilstrecke umfassen, entlang derer das Transportelement mit einer konstanten Geschwindigkeit bewegt werden kann. Die Teilstrecke kann hierzu eine Antriebsvorrichtung in Form eines Transportbandes, einer Transportkette oder ähnlichen umfassen. Durch Kombination von Teilstrecken mit Magnetantrieb und Teilstrecken mit einem mechanischen Antrieb können Installationskosten der gesamten Transporteinrichtung gesenkt werden.

In einer weiteren Weiterbildung kann das Transportelement vollmagnetisch oder teilweise magnetisch und teilweise mechanisch oder vollmechanisch an der Transportbahn gelagert sein. Bei vollmagnetischer Lagerung ist der oben beschriebene Teil der Transportbahn als Magnetschwebebahn ausgebildet, wobei elektrische Wicklungen in der Transportbahn und/oder dem Transportelement vorgesehen sind, welche eine magnetische Levitation des Transportelements über der Transportbahn bewirken. Dadurch lässt sich die Reibung zwischen dem Transportelement und der Transportbahn auf ein Minimum reduzieren. Bei teilweise magnetischer und teilweise mechanischer Lagerung kann das Transportelement zusätzlich ein oder mehrere Stützelemente, zum Beispiel in Form von Stützrollen und/oder Führungsrollen aufweisen. Die zusätzlichen Stützelemente rollen oder gleiten dabei auf einer Lauffläche der Transportbahn. Bei vollmechanischer Lagerung kann das Transportelement ausschließlich durch das beschriebene mindestens eine Stützelement gelagert sein. Ergänzend oder alternativ hierzu kann eine Lagerung auch pneumatisch erfolgen, wobei die Transportbahn in dem entsprechenden Teilstück als Luftschwebebahn ausgeführt ist. Bei pneumatischer Lagerung ergibt sich wie auch bei vollständig magnetischer Lagerung eine Minimierung der Reibung zwischen dem Transportelement und der Transportbahn.

Gemäß einer Weiterbildung kann die Transporteinrichtung weiterhin eine Steuereinrichtung, insbesondere ein Prozessrechner, zum Steuern des mindestens einen Transportelements umfassen. Die Steuereinrichtung kann dabei durch eine zentrale Steuereinheit und/oder durch dezentral an den Transportelementen angeordnete Steuereinheiten realisiert werden. Die eine oder mehrere Steuereinheiten können dabei derart ausgebildet sein, dass sie sowohl die elektrischen Wicklungen der Transportbahn und/oder der Transportelemente individuell steuern und/oder regeln als auch die Stellung der einen oder mehreren Weichen entlang der Transportbahn steuern. Wie oben beschrieben kann zur Steuerung und/oder Regelung der Elektromagnete der Transportbahn und/oder der Transportelemente insbesondere die Position eines oder mehrerer Transportelemente entlang der Transportbahn bestimmt werden. Darüber hinaus kann die Stromstärke durch die entsprechenden elektrischen Wicklungen in Abhängigkeit von der benötigten Kraft, das heißt in Abhängigkeit eines Beladungszustandes eines Transportelements und/oder einer gewünschten Beschleunigung/Abbremsung bzw. Geschwindigkeit des Transportelements geregelt werden. Des Weiteren können die eine oder mehrere Steuereinheiten als speicherprogrammierbare Steuereinheit/en SPS ausgebildet sein.

In einer weiteren Weiterbildung kann die Steuereinrichtung dazu ausgebildet sein, das Transportelement in Abhängigkeit von einer ersten Prozessdauer und/oder einem ersten Durchsatz der ersten Behälterbehandlungseinheit und/oder von einer zweiten Prozessdauer und/oder einem zweiten Durchsatz der zweiten Behälterbehandlungseinheit zu steuern. Dazu kann die erste Prozessdauer und/oder der erste Durchsatz und/oder die zweite Prozessdauer und/oder der zweite Durchsatz mittels eines oder mehrerer an der ersten bzw. zweiten Behälterbehandlungseinheit angebrachten Sensoren bestimmt werden und mittels Signalübertragung, entweder über Leitungen oder über Funk, an die Steuereinrichtung übermittelt werden. Anschließend kann in Kombination mit den von den Behälterbehandlungseinheiten übermittelten Signalen und den bestimmten Positionen eines oder mehrerer Transportelemente das mindestens eine Transportelement wie oben beschrieben derart gesteuert werden, dass ein Aufstauen vor bzw. ein Leerlauf einer Behälterbehandlungseinheit vermieden werden kann. Dazu kann die Steuereinrichtung anhand der bestimmten Positionen der Transportelemente eine Dichte an Transportelementen entlang einer vorgegebenen Teilstrecke der Transportbahn bzw. einen Strom an Transportelementen zu einer vorgegebenen Stelle der Transportbahn kontinuierlich überwachen und das mindestens eine Transportelement durch individuelles Ansteuern der elektrischen Wicklungen gemäß einer vorgegebenen Dichte und/oder einem vorgegebenen Strom entlang der Transportbahn leiten.

Die oben genannte Aufgabe wird auch durch ein Transportverfahren nach Anspruch 9, zum Transport von Behältern in einer Behälterbehandlungsanlage gelöst, die eine erste Behälterbehandlungseinheit für einen Prozessschritt und eine zweite Behälterbehandlungseinheit für den Prozessschritt aufweist, wobei das Transportverfahren die Schritte umfasst:
Aufnehmen mindestens eines ersten Behälters an einer ersten Aufnahmestelle durch ein Transportelement zum Transportieren von Behältern,
Transportieren des ersten Behälters mittels des Transportelements entlang der Transportbahn von der ersten Aufnahmestelle zu der ersten oder zweiten Behälterbehandlungseinheit, Transportieren des ersten Behälters mittels des Transportelements entlang der Transportbahn von der ersten oder zweiten Behälterbehandlungseinheit zu einer ersten Abgabestelle, Abgeben des ersten Behälters durch das Transportelement an der ersten Abgabestelle, und Rückführen des Transportelements zu der ersten Aufnahmestelle,
wobei das Transportelement einzeln gesteuert von der Aufnahmestelle zu der Abgabestelle geleitet wird.

Dabei können dieselben Variationen und Weiterbildungen, die oben im Zusammenhang mit der erfindungsgemäßen Transporteinrichtung beschrieben wurden, auch auf das Transportverfahren zum Transport von Behältern in einer Behälterbehandlungsanlage angewendet werden. Insbesondere kann das Aufnehmen und/oder Abgeben des ersten Behälters an der ersten Aufnahmestelle bzw. der ersten Abgabestelle durch mechanisch und/oder elektrisch gesteuertes Bewegen eines Greiferelements des Transportelements realisiert werden. Das Transportieren des ersten Behälters mittels des Transportelements entlang der Transportbahn kann durch Bewegen des Transportelements aufgrund magnetischer Wechselwirkung zwischen einem Reaktionselement des Transportelements und einer oder mehrerer Wechselwirkungselemente der Transportbahn geschehen. Wie oben beschrieben kann durch individuelles Ansteuern elektrischer Wicklungen in der Transportbahn und/oder an dem Transportelement das Transportelement einzeln entlang der Transportbahn, also insbesondere von der Aufnahmestelle zu der Abgabestelle, gesteuert werden. Dabei kann die individuelle Steuerung des Transportelements gemäß einer der oben beschriebenen Varianten umgesetzt werden. Insbesondere kann die Geschwindigkeit des Transportelements bei der Aufnahme bzw. der Abgabe des ersten Behälters einer Rotationsgeschwindigkeit bzw. einer Laufbandgeschwindigkeit eines entsprechenden Zuförderers bzw. Abförderers angepasst werden.

Gemäß einer Weiterbildung sind die erste und die zweite Behälterbehandlungseinheit parallel entlang der Transportbahn angeordnet, und der erste Behälter wird mittels des Transportelements wahlweise der ersten oder der zweiten Behälterbehandlungseinheit zugeführt. Wie oben beschrieben kann hierzu insbesondere die Stellung einer Weiche so gesteuert werden, dass das Transportelement mit dem ersten Behälter der ersten oder der zweiten Behälterbehandlungseinheit zugeführt wird.

Erfindungsgemäß wird der erste Behälter von der ersten Aufnahmestelle zu der ersten Behälterbehandlungseinheit transportiert, und das Rückführen des Transportelements zu der ersten Aufnahmestelle umfasst:
Aufnehmen mindestens eines zweiten Behälters an einer zweiten Aufnahmestelle durch das Transportelement,
Transportieren des zweiten Behälters mittels des Transportelements entlang der Transportbahn von der zweiten Aufnahmestelle zu der zweiten Behälterbehandlungseinheit,
Transportieren des zweiten Behälters mittels des Transportelements entlang der Transportbahn von der zweiten Behälterbehandlungseinheit zu einer zweiten Abgabestelle, und
Abgeben des zweiten Behälters durch das Transportelement an der zweiten Abgabestelle.

Wie oben beschrieben kann durch Aufnehmen eines zweiten Behälters durch das nach Abgeben des ersten Behälters an der ersten Abgabestelle unbeladene Transportelement während des Rückführens des Transportelements, durch Zuführen des zweiten Behälters zu der zweiten Behälterbehandlungseinheit und durch Abgeben des zweiten Behälters an der zweiten Abgabestelle nach Behandeln des zweiten Behälters durch die zweite Behälterbehandlungseinheit die Produktionskapazität der Behälterbehandlungsanlage deutlich erhöht und im Idealfall verdoppelt werden. Ebenso kann die Zahl der benötigten Transportelemente im Vergleich zu einer Behälterbehandlungsanlage mit ähnlicher Produktionskapazität reduziert werden und/oder Transportstrecke eingespart werden.

Gemäß einer weiteren Weiterbildung kann das Transportelement in Abhängigkeit eines Betriebszustandes und/oder eines Durchsatzes der zweiten Behälterbehandlungseinheit direkt von der ersten Abgabestellt zu der ersten Aufnahmestelle rückgeführt werden. Der Betriebszustand der zweiten Behälterbehandlungseinheit kann dabei als voll funktionsfähig, funktionsfähig mit reduzierter Leistung, oder gestoppt klassifiziert werden. Das direkte Rückführen des Transportelements, das heißt ohne das Transportelement an der zweiten Aufnahmestelle, der zweiten Behälterbehandlungseinheit und/oder der zweiten Abgabestelle vorbeizuführen, kann wie oben beschrieben mittels einer geeigneten Ausgleichstrecke und durch entsprechendes Steuern einer oder mehrerer Weichen zum Ausleiten und/oder wieder Einleiten des Transportelements geschehen. Äquivalent kann das Transportelement auch in Abhängigkeit eines Betriebszustands und/oder eines Durchsatzes der ersten Behälterbehandlungseinheit direkt von der zweiten Abgabestelle zu der zweiten Aufnahmestelle rückgeführt werden. Durch Kombination beider Optionen kann eine Behälterbehandlungsanlage zur Verfügung gestellt werden, welche fehlertolerant gegen den Ausfall einer einzigen Behälterbehandlungseinheit betrieben werden kann.

Weitere Merkmale und beispielhafte Ausführungsformen sowie Vorteile der vorliegenden Erfindung werden nachfolgend anhand der Zeichnungen näher erläutert. Es versteht sich, dass die Ausführungsformen nicht den Bereich der vorliegenden Erfindung erschöpfen. Es versteht sich weiterhin, dass einige oder sämtliche der im Weiteren beschriebenen Merkmale auch auf andere Weise miteinander kombiniert werden können.
- Figur 1: stellt eine Prinzipskizze für ein grundlegendes Beispiel einer Transporteinrichtung für den Fall einer Serienanordnung der ersten und zweiten Behälterbehandlungseinheit dar.
- Figur 2: stellt eine beispielhafte Ausführung des mindestens einen Transportelements und der Wechselwirkungselemente der Transportbahn dar.
- Figur 3: stellt eine Prinzipskizze für ein Beispiel einer Transporteinrichtung gemäß der vorliegenden Erfindung für den Fall dar, in welchem ein Teil der Rückführstrecke als eine zweite Prozessstrecke ausgebildet ist.
- Figur 4: stellt eine Prinzipskizze für ein Beispiel einer Transporteinrichtung für den Fall dar, in welchem die Transportelemente wahlweise der ersten oder der zweiten Behälterbehandlungseinheit zugeführt und an diese übergeben werden.
- Figur 5: stellt eine Prinzipskizze für ein Beispiel einer Transporteinrichtung für den Fall dar, in welchem die Transportelemente über eine erste Weiche wahlweise der ersten oder der zweiten Behälterbehandlungseinheit zugeführt und über eine zweite Weiche rückgeführt werden.
- Figur 6: stellt eine Prinzipskizze für eine Mehrfachanordnung der in Figur 3 dargestellten Transporteinrichtung dar.

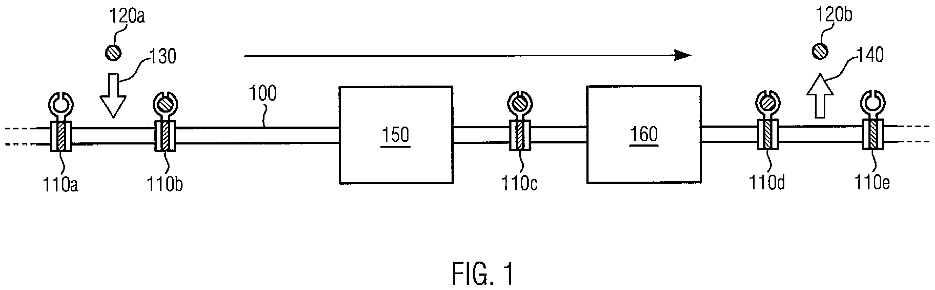

In Figur 1 ist eine Prinzipskizze für ein grundlegendes Beispiel einer Transporteinrichtung zum Transport von Behältern in einer Behälterbehandlungsanlage mit einer ersten Behälterbehandlungseinheit für einen Prozessschritt und einer zweiten Behälterbehandlungseinheit für den Prozessschritt dargestellt. Die schematisch dargestellte Transportbahn 100 verbindet eine Aufnahmestelle 130 über die erste Behälterbehandlungseinheit 150 und die zweite Behälterbehandlungseinheit 160, die hier beispielhaft in Serie angeordnet sind, mit einer Abgabestelle 140. Ein unbeladenes Transportelement 110a nimmt an der Aufnahmestelle 130 einen Behälter 120a auf. Anschließend wird der Behälter 120a mittels des nunmehr beladenen Transportelements 110b zu der ersten Behälterbehandlungseinheit 150 entlang der Transportbahn 100 transportiert. Von der ersten Behälterbehandlungseinheit transportiert das Transportelement 110c den Behälter zu der zweiten Behälterbehandlungseinheit 160. Von der zweiten Behälterbehandlungseinheit transportiert das Transportelement 110d den Behälter zu der Abgabestelle 140, wo der Behälter 120b an einen Ablaufförderer abgegeben wird. Anschließend ist das Transportelement 110e wieder unbeladen und kann zur Aufnahmestelle rückgeführt werden (hier nicht dargestellt).

Bei der Figur 1 handelt es sich um eine Darstellung mehrerer Momentaufnahmen 110a bis 110e eines einzigen Transportelements zu verschiedenen Zeitpunkten während des Prozessablaufs. Demnach handelt es sich bei den dargestellten Behältern 120a und 120b um denselben Behälter. Die Figur zeigt eine Transportbahn, die durch die erste und zweite Behälterbehandlungseinheit hindurch führt. Alternativ dazu kann jedoch wie oben beschrieben die Transportbahn auch an den Behälterbehandlungseinheiten derart vorbeiführen, dass die vorbeigeführten Behälter entweder auf dem Transportelement behandelt werden können oder zur Behandlung in der Behälterbehandlungseinheit an diese übergeben werden können. Neben dem hier dargestellten Transportelement kann sich eine Vielzahl von Transportelementen entlang der Transportbahn befinden, wobei jedes einzelne Transportelement individuell durch eine Steuerung gesteuert werden kann. Durch kontinuierliches Zuführen von Transportelementen zu der Aufnahmestelle kann ein kontinuierlicher Fluss von beladenen Transportelementen entlang der Prozessstrecke erzielt werden.

Da die erste Behälterbehandlungseinheit und die zweite Behälterbehandlungseinheit jeweils denselben Prozessschritt durchführen, wird ein von einem Transportelement transportierter Behälter nur in einer der beiden Behälterbehandlungseinheiten behandelt. Zu diesem Zweck kann die Transportbahn beispielsweise je eine Umgehungsstrecke für die erste und die zweite Behälterbehandlungseinheit umfassen, welche über Weichen mit der Prozessstrecke der Transportbahn verbunden ist, und über welche einzelne Transportelemente vor einer der beiden Behälterbehandlungseinheiten gesteuert ausgeschleust und hinter der Behälterbehandlungseinheit wieder eingefädelt werden können. Alternativ dazu können die erste und die zweite Behälterbehandlungseinheit derart gesteuert werden, dass einzelne Transportelemente die Behälterbehandlungseinheit ohne Behandlung der mitgeführten Behälter passieren können, somit also eine Lückenverarbeitung stattfindet. Im einfachsten Fall, bei Verwendung identischer Behälterbehandlungseinheiten, kann beispielsweise jedes zweite Transportelement die erste Behälterbehandlungseinheit 150 ohne Behandlung passieren, um den mitgeführten Behälter in der zweiten Behälterbehandlungseinheit 160 behandeln zu lassen. Entsprechend können die in der ersten Behälterbehandlungseinheit behandelten Behälter die zweite Behälterbehandlungseinheit ohne Behandlung passieren. Zu diesem Zweck kann jedes Transportelement einen lesbaren und beschreibbaren Informationsspeicher aufweisen, in welchem ein Behandlungszustand des mitgeführten Behälters gespeichert werden kann. Entsprechend können die erste und die zweite Behälterbehandlungseinheit eine Leseeinheit zum Auslesen des Informationsspeichers umfassen, so dass eine Behandlung in Abhängigkeit von dem ausgelesenen Behandlungszustand durchgeführt werden kann. Eine Steuereinheit (hier nicht dargestellt) kann die Vielzahl der Transportelemente dabei derart steuern, dass ein Leerlaufen einer Behälterbehandlungseinheit bzw. ein Aufstauen von Transportelementen vor einer Behälterbehandlungseinheit vermieden werden kann.

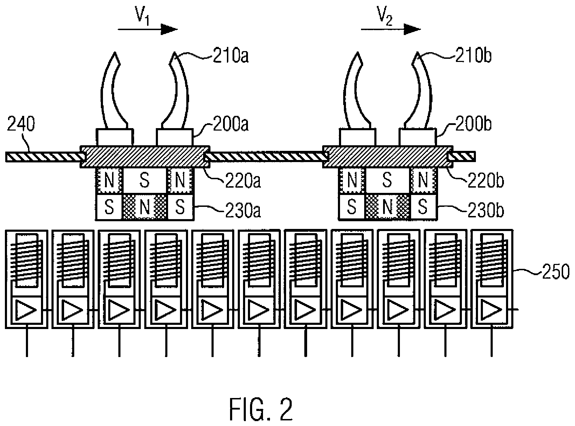

In Figur 2 sind exemplarisch zwei Transportelemente 200a und 200b dargestellt. Die vorliegende Offenbarung beschränkt sich jedoch nicht auf die hier dargestellte spezielle Ausführung der Transportelemente, sondern ist auf jede Art von Transportelementen anwendbar, solange diese einzeln steuerbar entlang einer Transportbahn geleitet werden können. Die hier dargestellten Transportelemente 200a und 200b können entlang der Transportbahn mittels einer Führungsschiene 240 geleitet werden. Dabei sind die Transportelemente in dieser speziellen Ausführung durch Gleitlager 220a und 220b an der Führungsschiene 240 gelagert. Die Figur zeigt weiterhin zwei Greiferelemente 210a und 210b, mittels derer die Transportelemente die Behälter aufnehmen können.

Der Antrieb der hier dargestellten passiven Transportelemente geschieht durch magnetische Wechselwirkung zwischen den Reaktionselementen 230a bzw. 230b der Transportelemente und einer Vielzahl elektrischer Wicklungen 250 entlang der Transportbahn. Dabei können die elektrischen Wicklungen 250 individuell angesteuert und als Elektromagnete einzeln umgepolt werden. Durch Wechselwirkung der Magnetfelder der Elektromagnete mit den hier dargestellten Permanentmagneten der Transportelemente erfahren die Transportelemente eine Kraftwirkung, welche bei geeigneter Steuerung der Elektromagnete 250 zu einer Beschleunigung, Abbremsung oder konstanten Bewegung der Transportelemente entlang der Führungsschiene 240 führt. Die hier dargestellten Reaktionselemente 230a und 230b der Transportelemente bestehen aus drei alternierend senkrecht zur Führungsschiene angeordneten Permanentmagneten, wobei die Breite des mittleren Permanentmagneten in etwa dem Abstand zweier benachbarter elektrischer Wicklungen der Transportbahn entspricht und die Breite der äußeren Permanentmagneten etwa jeweils der Hälfte des Abstandes der benachbarten elektrischen Wicklungen entspricht. Bei alternierender Polung benachbarter Elektromagnete in der Transportbahn kann somit eine maximale Kraft auf das Reaktionselement entlang der Führungsschiene ausgeübt werden. Durch individuelles Ansteuern der Elektromagnete 250 können die Transportelemente 200a und 200b mit unterschiedlichen Geschwindigkeiten V₁ und V₂ entlang der Führungsschiene 240 bewegt werden.

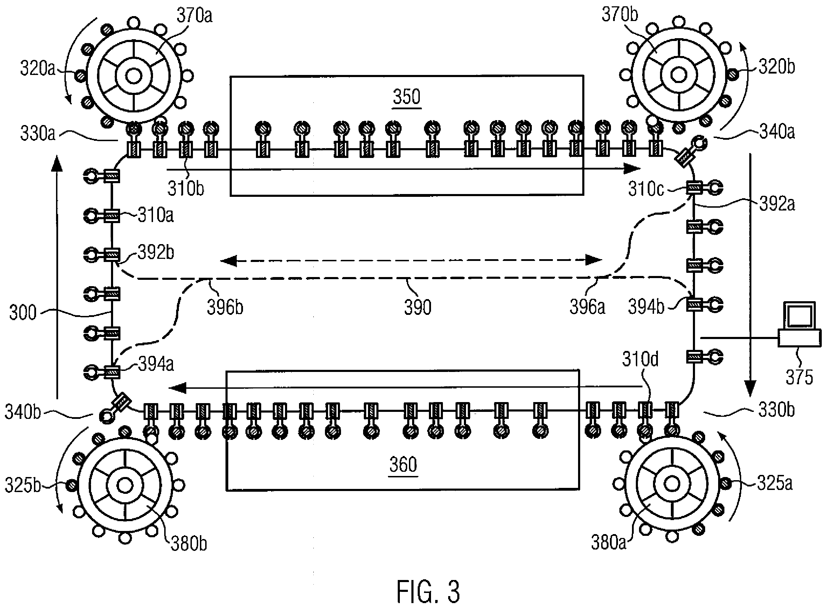

Figur 3 stellt eine Prinzipskizze für ein Beispiel einer Transporteinrichtung gemäß der vorliegenden Erfindung für den Fall dar, dass die Rückführstrecke zumindest teilweise als eine zweite Prozessstrecke ausgebildet ist. Die nunmehr geschlossen dargestellte Transportbahn 300 verbindet eine erste Aufnahmestelle 330a über die erste Behälterbehandlungseinheit 350 mit einer ersten Abgabestelle 340a und eine zweite Aufnahmestelle 330b über die zweite Behälterbehandlungseinheit 360 mit einer zweiten Abgabestelle 340b. Somit ist die Rückführstrecke von der ersten Abgabestelle 340a zur ersten Aufnahmestelle 330a als zweite Prozessstrecke ausgebildet, welche aus der zweiten Aufnahmestelle 330b, der zweiten Behälterbehandlungseinheit 360 und der zweiten Abgabestelle 340b besteht. Die Zuförderer und Abförderer sind hier exemplarisch als erstes Einlaufsternrad 370a, zweites Einlaufsternrad 380a, erstes Auslaufsternrad 370b und zweites Auslaufsternrad 380b dargestellt. Die Figur zeigt eine Vielzahl von Transportelementen 310a bis 310d in unterschiedlichen Beladungszuständen entlang der Transportbahn 300. Das zunächst unbeladene Transportelement 310a nimmt von dem ersten Einlaufsternrad 370a einen ersten Behälter 320a auf. Nunmehr beladen transportiert das Transportelement 310b den ersten Behälter entlang der ersten Prozessstrecke durch die erste Behälterbehandlungsanlage 350, wo der erste Behälter einer Behandlung durch den Prozessschritt unterworfen wird. Anschließend gibt das Transportelement den ersten Behälter 320b an das erste Auslaufsternrad 370b ab und wird als unbeladenes Transportelement 310c als Teil der Rückführstrecke dem zweiten Einlaufsternrad 380a zugeführt. Dort nimmt das Transportelement 310d einen zweiten Behälter 325a auf und transportiert den zweiten Behälter entlang der zweiten Prozessstrecke, welche nunmehr ein Teil der Rückführstrecke ist, zu der zweiten Behälterbehandlungseinheit 360, wo der zweite Behälter einer Behandlung durch denselben Prozessschritt unterworfen wird, dem der erste Behälter in der ersten Behälterbehandlungseinheit 350 unterworfen wurde. Der nunmehr behandelte Behälter 325b wird von dem Transportelement am zweiten Auslaufsternrad 380b wieder abgegeben. Somit schließt sich ein Kreislauf, in welchem zwei Prozessstrecken mit identischen Behälterbehandlungseinheiten gegenläufig durchlaufen werden.

Um ein Aufstauen von Transportelementen vor einer Behälterbehandlungseinheit bzw. ein Leerlaufen einer Behälterbehandlungseinheit zu vermeiden, umfasst die hier dargestellte Transporteinrichtung für den Fall, dass eine Prozessdauer und/oder ein Durchsatz an behandelten Behältern der ersten und der zweiten Behälterbehandlungseinheit verschieden ist, insbesondere wenn eine der beiden Behälterbehandlungseinheiten wegen notwendiger Wartungs-, Instandhaltungs- oder Reinigungsarbeiten angehalten werden muss, zusätzlich eine Ausgleichsstrecke 390. Dabei ist die Ausgleichsstrecke 390 über die Weichen 392a und 394a zum Ausschleusen unbeladener Transportelemente aus den respektiven Vorlaufstrecken der langsamer arbeitenden oder stillstehenden Behälterbehandlungseinheit mit der Transportbahn verbunden. Über eine Verbindung der Ausgleichsstrecke über die Weichen 392b und 394b können die ausgeschleusten Transportelemente wieder in die jeweilige Vorlaufstrecke der schneller arbeitenden oder nicht stillstehenden Behälterbehandlungseinheit eingefädelt werden. Die beiden Verbindungsstücke zu der jeweiligen Vorlaufstrecke sind dabei über die Weichen 396a und 396b mit dem Mittelteil der Ausgleichsstrecke 390 verbunden, welcher ein Führen von Transportelementen in beide Richtungen erlaubt. Die hier dargestellte speicherprogrammierbare Steuereinheit 375 regelt die Geschwindigkeiten der einzelnen Transportelemente durch individuelles Ansteuern der Transportelemente und der Wechselwirkungselemente der Transportbahn und durch Steuern der Stellungen der Weichen der Ausgleichsstrecke. Diese Regelung kann anhand von Positionsbestimmungen der Transportelemente in Abhängigkeit von den Dichten an Transportelementen in vorgegebenen Teilstrecken sowie von dem Durchfluss an Transportelementen durch die erste und zweite Behälterbehandlungseinheit erfolgen.

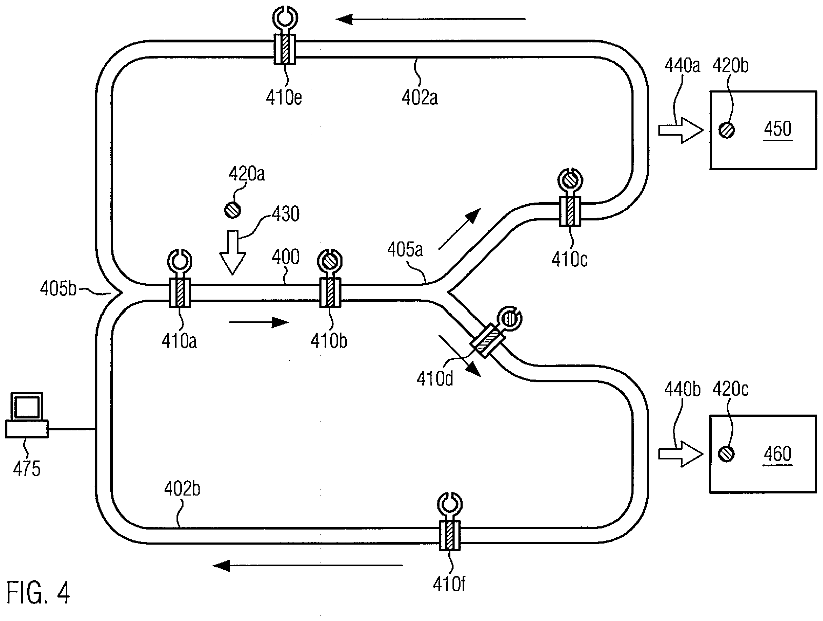

Figur 4 stellt eine Prinzipskizze für ein Beispiel einer Transporteinrichtung für den Fall dar, dass das Transportelement wahlweise der ersten Behälterbehandlungseinheit 450 oder der zweiten Behälterbehandlungseinheit 460 zugeführt wird. Zu diesem Zweck umfasst die Transportbahn eine erste Weiche 405a, dessen Stellung von einer speicherprogrammierbaren Steuereinheit 475 in Abhängigkeit einer Prozessdauer und/oder eines Durchsatzes der beiden Behälterbehandlungseinheiten sowie der Positionen der Transportelemente entlang der Transportbahn 400 geregelt werden kann. Die hier dargestellte Konfiguration der Transporteinrichtung umfasst zwei separate Rückführstrecken 402a und 402b für die beiden Behälterbehandlungseinheiten. Die beiden Rückführstrecken werden über eine zweite Weiche 405b wieder zusammen geführt.

Ein zunächst unbeladenes Transportelement 410a nimmt an der Aufnahmestelle 430 einen Behälter 420a auf. Das nunmehr beladene Transportelement 410b transportiert den Behälter zu der ersten Weiche 405a. In Abhängigkeit von der Stellung der Weiche führt das Transportelement 410c bzw. 410d den Behälter anschließend entweder einer ersten Abgabestelle 440a oder einer zweiten Abgabestelle 440b zu. An der ersten Abgabestelle 440a wird der Behälter 420b an die erste Behälterbehandlungseinheit 450 übergeben. An der zweiten Abgabestelle 440b wird der Behälter 420c an die zweite Behälterbehandlungseinheit 460 übergeben. Nach Behandlung des Behälters 420b bzw. 420c kann der Behälter von einer Abgabevorrichtung der ersten bzw. zweiten Behälterbehandlungseinheit einer weiteren Transporteinrichtung und über diese weiteren Prozessschritten zugeführt werden. Das entladene Transportelement 410e bzw. 410f wird anschließend über die jeweilige Rückführstrecke 402a bzw. 402b zurück zur zweiten Weiche 405b geführt. Ebenso wie die in Figur 3 dargestellte Konfiguration lässt sich auch die in dieser Figur dargestellte Konfiguration fehlertolerant gegenüber dem Ausfall einer einzelnen Behälterbehandlungseinheit betreiben.

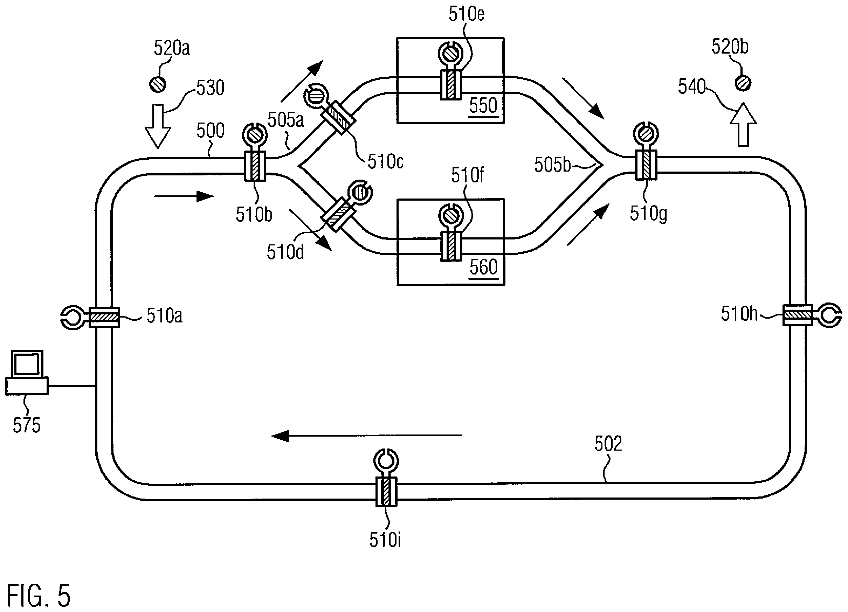

Figur 5 stellt eine Prinzipskizze für ein Beispiel einer Transporteinrichtung dar, welches eine alternative Konfiguration zu der in Figur 4 dargestellten wahlweisen Zuführung der Transportelemente zu der ersten oder zweiten Behälterbehandlungseinheit realisiert. Anders als in Figur 4 verfügt die hier dargestellte Konfiguration über eine gemeinsame Rückführstrecke 502, entlang welcher die entladenen Transportelemente 510h und 510i zurück zur Aufnahmestelle 530 geführt werden. Die Transportbahn 500 umfasst somit zwei parallele Zweige zwischen der ersten Weiche 505a und der zweiten Weiche 505b, entlang derer die erste Behälterbehandlungseinheit 550 und die zweite Behälterbehandlungseinheit 560 angeordnet sind. Ein zunächst unbeladenes Transportelement 510a nimmt dabei bei der Annahmestelle 530 einen Behälter 520a auf. Das nunmehr beladene Transportelement 510b führt den Behälter der ersten Weiche 505a zu, von wo aus der Behälter je nach Stellung der Weiche durch das Transportelement 510c bzw. 510d der ersten oder zweiten Behälterbehandlungseinheit zugeführt wird. Die Referenzzeichen 510e bzw. 510f bezeichnen das jeweilige Transportelement zum Zeitpunkt der Behandlung des Behälters durch die jeweilige Behälterbehandlungseinheit. Von der ersten bzw. zweiten Behälterbehandlungseinheit wird das Transportelement 510g über die zweite Weiche 505b zu der Abgabestelle 540 geführt, wo der mitgeführte Behälter 520b abgegeben wird. Wie oben mehrfach beschrieben wird durch eine speicherprogrammierbare Steuereinheit 575 die Bewegung der einzelnen Transportelemente und die Stellung der Weichen derart geregelt, dass ein Aufstauen von Transportelementen vor einer langsameren oder ausgefallenen Behälterbehandlungseinheit und ein Leerlaufen einer schneller arbeitenden Behälterbehandlungseinheit vermieden werden kann. Auch diese Konfiguration kann fehlertolerant gegenüber dem Ausfall einer einzelnen Behälterbehandlungseinheit betrieben werden.

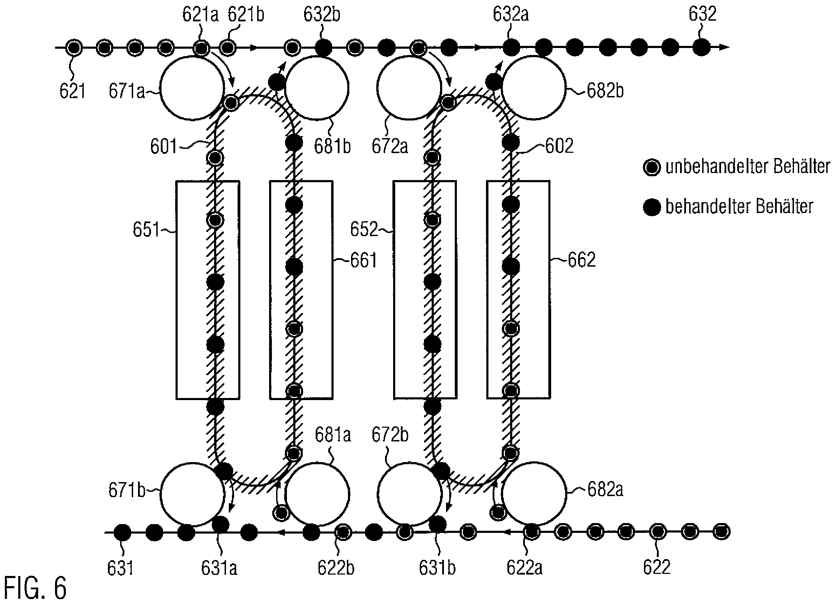

Figur 6 schließlich stellt eine Prinzipskizze für eine Mehrfachanordnung der in Figur 3 dargestellten Transporteinrichtung dar. Die dargestellte Mehrfachanordnung weist zwei autonome, der in Figur 3 dargestellten Transporteinrichtung entsprechende Einheiten auf. Dabei umfasst die erste Einheit einen ersten Zuförderer 671a, einen ersten Abförderer 671b, einen zweiten Zuförderer 681a, einen zweiten Abförderer 681b, eine erste Behälterbehandlungseinheit 651, eine zweite Behälterbehandlungseinheit 661 sowie eine erste Transportbahn 601. Die zweite Einheit umfasst einen dritten Zuförderer 672a, einen dritten Abförderer 672b, einen vierten Zuförderer 682a, einen vierten Abförderer 682b, eine dritte Behälterbehandlungseinheit 652, eine vierte Behälterbehandlungseinheit 662 sowie eine zweite Transportbahn 602. Im einfachsten Fall sind die erste bis vierte Behälterbehandlungseinheit als identische Behälterbehandlungseinheiten ausgeführt. In diesem Fall kann über die Zuförderer 671a und 672a bzw. 681a und 682a jeweils eine Lückenverarbeitung der entlang der Transportbahnen 621 bzw. 622 zugeführten Behälter erfolgen. Dabei wird beispielsweise jeder zweiter Behälter 621a der dritten Transportbahn 621 von dem ersten Zuförderer 671a zur Behandlung durch die erste Behälterbehandlungseinheit 651 an die erste Einheit übergeben, während die verbleibenden Behälter 621b von dem dritten Zuförderer 672a zur Behandlung durch die dritte Behälterbehandlungseinheit 652 an die zweite Einheit übergeben werden. Entsprechend wird jeder zweiter Behälter 622a der vierten Transportbahn 622 von dem vierten Zuförderer 682a zur Behandlung durch die vierte Behälterbehandlungseinheit 662 an die zweite Einheit übergeben, während die verbleibenden Behälter 622b von dem zweiten Zuförderer 681a zur Behandlung durch die zweite Behälterbehandlungseinheit 661 an die erste Einheit übergeben werden. Durch die Abförderer 671b und 672b bzw. 681b und 682b werden die nunmehr behandelten Behälter 631a und 631b bzw. 632a und 632b an die jeweils andere Transportbahn übergeben.

Die in Figur 3 dargestellte Ausgleichstrecke und die entsprechenden Weichen sind in Figur 6 aus Gründen der Übersichtlichkeit nicht dargestellt, können aber ebenso für die erste und zweite Einheit vorgesehen werden. Mit der dargestellten Mehrfachanordnung ergibt sich eine hochgradig fehlertolerante Behälterbehandlungsanlage. Bei Verwendung individuell steuerbarer Transportelemente für die beiden Transportbahnen 621 und 622 lässt sich die Anlage fehlertolerant gegenüber dem Ausfall von bis zu drei Behälterbehandlungseinheiten betreiben. Durch Steuerung der Fördergeschwindigkeiten der Zuförderer und Abförderer und durch individuelle Steuerung der Transportelemente können außerdem Unterschiede in der Prozessdauer und/oder dem Durchsatz der einzelnen Behälterbehandlungseinheiten ausgeglichen werden.

Es versteht sich von selbst, dass die in den Figuren 1 und 3 bis 6 dargestellten Konfigurationen für Behälterbehandlungsanlagen mit einer ersten und einer zweiten Behälterbehandlungseinheit durch Hinzufügen entsprechender Prozessstrecken, Weichen und/oder Ausgleichsstrecken auf eine beliebige Anzahl von redundant arbeitenden Behälterbehandlungseinheiten erweitert werden können. Ebenso können die gezeigten Konfigurationen um Behälterbehandlungseinheiten für weitere Prozessschritte erweitert werden, wobei speziell bei der in Figur 5 gezeigten Konfiguration durch Ersetzen eines Teils der Rückführstrecke 502 durch parallel geschaltete Behälterbehandlungseinheiten für die weiteren Prozessschritte eine vollständige Prozesskette aufgebaut werden kann. Dabei kann die Zahl der redundant geschalteten Behälterbehandlungseinheiten je nach Prozessschritt variieren. Zudem sind weitere Ausgleichsstrecken und/oder Umgehungsstrecken zur verbesserten Steuerung der Behälterbehandlungsanlage denkbar.

## Patentansprüche

1. Behälterbehandlungsanlage, die eine erste Behälterbehandlungseinheit (350) für einen Prozessschritt und eine zweite Behälterbehandlungseinheit (360) für den Prozessschritt aufweist, und die eine Transporteinrichtung zum Transport von Behältern in der Behälterbehandlungsanlage (350) umfasst mit einer ersten Aufnahmestelle (330a) für Behälter, einer ersten Abgabestelle (340a) für Behälter, **dadurch gekennzeichnet, dass** die Transporteinrichtung
eine zweite Aufnahmestelle (330b) für Behälter,
und eine zweite Abgabestelle (340b) für Behälter umfasst, sowie einer Transportbahn (300), welche die erste Behälterbehandlungseinheit (350) und die zweite Behälterbehandlungseinheit (360) in Serie verbindet, wobei die Transportbahn (300) umfasst: eine erste Prozessstrecke, welche die erste Aufnahmestelle (330a) über die erste Behälterbehandlungseinheit (350) mit der ersten Abgabestelle (340a) verbindet, und eine Rückführstrecke für ein Transportelement (310a-310d), wobei zumindest ein Teil der Rückführstrecke als eine zweite Prozessstrecke ausgebildet ist, welche die zweite Aufnahmestelle (330b) über die zweite Behälterbehandlungseinheit (360) mit der zweiten Abgabestelle (340b) verbindet, und mindestens einem Transportelement (310a-310d) zum Transportieren mindestens eines Behälters, das an der Transportbahn (300) bewegbar angeordnet ist, wobei die Transportbahn (300) und das mindestens eine Transportelement (310a-310d) derart ausgestaltet sind, dass das mindestens eine Transportelement (310a-310d) einzeln steuerbar von einer Aufnahmestelle zu einer Abgabestelle geleitet werden kann.

2. Behälterbehandlungsanlage nach Anspruch 1,
wobei die Transportbahn (300) weiterhin eine Ausgleichsstrecke (390) umfasst, welche die erste Abgabestelle (340a) mit der ersten Aufnahmestelle (330a) und/oder die zweite Abgabestelle (340b) mit der zweiten Aufnahmestelle (330b) verbindet.

3. Behälterbehandlungsanlage nach Anspruch 2,
wobei zumindest ein Teil der Ausgleichsstrecke (390) derart ausgebildet ist, dass das Transportelement (310a-310d) in beide Richtungen geführt werden kann.

4. Behälterbehandlungsanlage nach einem der vorhergehenden Ansprüche, wobei die erste Behälterbehandlungseinheit (350) einen ersten Schutzbereich aufweist und die zweite Behälterbehandlungseinheit (360) einen zweiten, von dem ersten getrennten Schutzbereich aufweist, und wobei der Schutzbereich ein Gefahrenbereich rund um die jeweilige Behälterbehandlungseinheit ist.

5. Behälterbehandlungsanlage nach einem der vorhergehenden Ansprüche, wobei das Transportelement (310a-310d) und zumindest ein Teil der Transportbahn (300) derart ausgebildet sind, dass das Transportelement (310a-310d) im Bereich des Teils der Transportbahn (300) mittels einer magnetischen Kraft, vorzugsweise in Wechselwirkung mit der Transportbahn, bewegt werden kann.

6. Behälterbehandlungsanlage nach einem der vorhergehenden Ansprüche, wobei das Transportelement voll magnetisch oder teilweise magnetisch und teilweise mechanisch oder voll mechanisch an der Transportbahn gelagert ist.

7. Behälterbehandlungsanlage nach einem der vorhergehenden Ansprüche, weiterhin eine Steuereinrichtung, insbesondere einen Prozessrechner, zum Steuern des Transportelements umfassend.

8. Behälterbehandlungsanlage nach Anspruch 7, wobei die Steuereinrichtung dazu ausgebildet ist, das Transportelement (310a-310d) in Abhängigkeit von einer ersten Prozessdauer und/oder einem ersten Durchsatz der ersten Behälterbehandlungseinheit (350) und/oder von einer zweiten Prozessdauer und/oder einem zweiten Durchsatz der zweiten Behälterbehandlungseinheit (360) zu steuern.

9. Transportverfahren zum Transport von Behältern in einer Behälterbehandlungsanlage, die eine erste Behälterbehandlungseinheit (350) für einen Prozessschritt und eine zweite Behälterbehandlungseinheit (360) für den Prozessschritt aufweist, mit den Schritten:
Aufnehmen mindestens eines ersten Behälters an einer ersten Aufnahmestelle (330a) durch ein Transportelement (310a-310d) zum Transportieren von Behältern, Transportieren des ersten Behälters mittels des Transportelements (310a-310d) entlang der Transportbahn (300) von der ersten Aufnahmestelle (330a) zu der ersten Behälterbehandlungseinheit (350), Transportieren des ersten Behälters mittels des Transportelements (310a-310d) entlang der Transportbahn von der ersten Behälterbehandlungseinheit (350) zu einer ersten Abgabestelle (340a), Abgeben des ersten Behälters durch das Transportelement (310a-310d) an der ersten Abgabestelle (340a), **gekennzeichnet durch** die Schritte: Rückführen des Transportelements (310a-310d) zu der ersten Aufnahmestelle (330a), umfassend:
Aufnehmen mindestens eines zweiten Behälters an einer zweiten Aufnahmestelle (330b) durch das Transportelement (310a-310d), Transportieren des zweiten Behälters mittels des Transportelements (310a-310d) entlang der Transportbahn (300) von der zweiten Aufnahmestelle (330b) zu der zweiten Behälterbehandlungseinheit (360), Transportieren des zweiten Behälters mittels des Transportelements (310a-310d) entlang der Transportbahn (300) von der zweiten Behälterbehandlungseinheit (360) zu einer zweiten Abgabestelle (340b), und Abgeben des zweiten Behälters durch das Transportelement (310a-310d) an der zweiten Abgabestelle (340b),
wobei das Transportelement (310a-310d) einzeln gesteuert von der Aufnahmestelle zu der Abgabestelle geleitet wird.

10. Transportverfahren nach Anspruch 9, wobei das Transportelement (310a-310d) in Abhängigkeit eines Betriebszustands und/oder eines Durchsatzes der zweiten Behälterbehandlungseinheit (360) direkt von der ersten Abgabestelle (340a) zu der ersten Aufnahmestelle (330a) rückgeführt wird.

## Claims

1. A container treatment system which has a first container treatment unit (350) for a process step and a second container treatment unit (360) for said process step, and which comprises a transport device for transporting containers in the container treatment system (350), with
a first receiving point (330a) for containers,
a first delivery point (340a) for containers,
**characterized in that** the transport device comprises a second receiving point (330b) for containers, and a second delivery point (340b) for containers, as well as
a transport track (300), which connects said first container treatment unit (350) and said second container treatment unit (360) in series, where said transport track (300) comprises: a first process path, which connects said first receiving point (330a) via said first container treatment unit (350) to said first delivery point (340a), and
a return path for a transport element (310a-310d), where at least a section of said return path is formed as a second process path, which connects said second receiving point (330b) via said second container treatment unit (360) to said second delivery point (340b), and
at least one transport element (310a-310d) for transporting at least one container being movably arranged on said transport track (300),
where said transport track (300) and said at least one transport element (310a-310d) are designed such that said at least one transport element (310a-310d) can be guided from a receiving point to a delivery point in an individually controllable manner.

2. Container treatment system according to claim 1,
where said transport track (300) further comprises a compensation path (390) connecting said first delivery point (340a) to said first receiving point (330a) and/or said second delivery point (340b) to said second receiving point (330b).

3. Container treatment system according to claim 2,
where at least a section of said compensation path (390) is configured such that said transport element (310a-310d) can be guided in either direction.

4. Container treatment system according to one of the preceding claims, where said first container treatment unit (350) comprises a first protection zone and said second container treatment unit (360) a second protection zone separate from said first protection zone, and where the protection zone denotes a hazard area around the respective container treatment unit.

5. Container treatment system according to one of the preceding claims, where said transport element (310a-310d) and at least a section of said transport track (300) are formed such that said transport element (310a-310d) can in the area of said section of said transport track (300) be moved by way of magnetic force, preferably, in interaction with said transport track.

6. Container treatment system according to one of the preceding claims, where said transport element is supported fully magnetically or in part magnetically and in part mechanically or fully mechanically at said transport track.

7. Container treatment system according to one of the preceding claims, further comprising a control device, in particular a process computer, for controlling said transport element.

8. Container treatment system according to claim 7, where said control device is configured to control said transport element (310a-310d) in dependence of a first process time and/or a first throughput of said first container treatment unit (350) and/or of a second process time and/or a second throughput of said second container treatment unit (360).

9. Transport method for transporting containers in a container treatment system which comprises a first container treatment unit (350) for a process step and a second container treatment unit (360) for said process step, comprising the steps of:
a transport element (310a-310d) receiving at least one first container at a first receiving point (330a) for transporting containers,
transporting said first container by way of said transport element (310a-310d) along said transport track (300) from said first receiving point (330a) to said first container treatment unit (350),
transporting said first container by way of said transport element (310a-310d) along said transport track from said first container treatment unit (350) to a first delivery point (340a),
said transport element (310a-310d) delivering said first container at said first delivery point (340a), **characterized by**:
returning said transport element (310a-310d) to said first receiving point (330a), comprising:
said transport element (310a-310d) receiving at least one second container at a second receiving point (330b),
transporting said second container by way of said transport element (310a-310d) along said transport track (300) from said second receiving point (330b) to said second container treatment unit (360),
transporting said second container by way of said transport element (310a-310d) along said transport track (300) from said second container treatment unit (360) to a second delivery point (340b), and
said transport element (310a-310d) delivering said second container at said second delivery point (340b),
wherein said transport element (310a-310d) is guided in an individually controlled manner from said receiving point to said delivery point.

10. Transport method according to claim 9, where said transport element (310a-310b) is in dependence of an operating state and/or a throughput of said second container treatment unit (360) returned directly from said first delivery point (340a) to said first receiving point (330a).

## Revendications

1. Installation de traitement de contenants, qui comprend une première unité de traitement de contenants (350) pour une étape de processus, et une deuxième unité de traitement de contenants (360) pour l'étape de processus, et qui comprend un dispositif de transport pour le transport de contenants dans l'installation de traitement de contenants (350) avec un premier point d'accueil (330a) pour des contenants, un premier point d'évacuation (340a) pour des contenants,
**caractérisée en ce que** le dispositif de transport comporte un deuxième point d'accueil (330b) pour des contenants et un deuxième point d'évacuation (340b) pour des contenants, ainsi qu'une voie de transport (300), qui relie en série la première unité de traitement de contenants (350) et la deuxième unité de traitement de contenants (360), la voie de transport (300) comprenant :
un premier parcours de processus, qui relie le premier point d'accueil (330a) au premier point d'évacuation (340a) par l'intermédiaire de la première unité de traitement de contenants (350), et
un parcours de retour pour un élément de transport (310a-310d), au moins une partie du parcours de retour étant réalisée en tant que deuxième parcours de processus, qui relie le deuxième point d'accueil (330b) au deuxième point d'évacuation (340b) par l'intermédiaire de la deuxième unité de traitement de contenants (360), et
au moins un élément de transport (310a-310d) pour assurer le transport d'au moins un contenant, et qui est agencé de manière mobile sur la voie de transport (300), la voie de transport (300) et ledit au moins un élément de transport (310a-310d) étant conçus de manière telle, que ledit au moins un élément de transport (310a-310d) puisse être mené et guidé d'un point d'accueil à un point d'évacuation en étant commandé de manière individuelle.

2. Installation de traitement de contenants selon la revendication 1, dans laquelle la voie de transport (300) comprend par ailleurs, un parcours de compensation (390), qui relie le premier point d'évacuation (340a) au premier point d'accueil (330a), et/ou le deuxième point d'évacuation (340b) au deuxième point d'accueil (330b).

3. Installation de traitement de contenants selon la revendication 2, dans laquelle au moins une partie du parcours de compensation (390) est conçue de manière telle, que l'élément de transport (310a-310d) puisse être mené et guidé dans les deux sens.

4. Installation de traitement de contenants selon l'une des revendications précédentes, dans laquelle la première unité de traitement de contenants (350) présente une première zone de protection, et la deuxième unité de traitement de contenants (360) présente une deuxième zone de protection, séparée de la première zone de protection, la zone de protection étant une zone de danger tout autour de l'unité de traitement de contenants respective.

5. Installation de traitement de contenants selon l'une des revendications précédentes, dans laquelle l'élément de transport (310a-310d) et au moins une partie de la voie de transport (300) sont conçus de manière telle, que l'élément de transport (310a-310d) puisse être déplacé dans ladite partie de la voie de transport (300), au moyen d'une force magnétique, de préférence par interaction réciproque avec la voie de transport.

6. Installation de traitement de contenants selon l'une des revendications précédentes, dans laquelle l'élément de transport est monté de manière totalement magnétique ou partiellement magnétique et partiellement mécanique, ou bien de manière totalement mécanique, sur la voie de transport.

7. Installation de traitement de contenants selon l'une des revendications précédentes, comprenant, en outre, un dispositif de commande, notamment un calculateur de processus, pour commander l'élément de transport.

8. Installation de traitement de contenants selon la revendication 7, dans laquelle, le dispositif de commande est conçu pour commander l'élément de transport (310a-310d) en fonction d'une première durée de processus et/ou d'un premier débit de la première unité de traitement de contenants (350), et/ou en fonction d'une deuxième durée de processus et/ou d'un deuxième débit de la deuxième unité de traitement de contenants (360) .

9. Procédé de transport pour transporter des contenants dans une installation de traitement de contenants, qui comprend une première unité de traitement de contenants (350) pour une étape de processus, et une deuxième unité de traitement de contenants (360) pour l'étape de processus, le procédé comprenant les étapes suivantes :
accueil d'au moins un premier contenant au niveau d'un premier point d'accueil (330a), par un élément de transport (310a-310d) pour transporter des contenants,
transport du premier contenant au moyen de l'élément de transport (310a-310d) le long de la voie de transport (300), du premier point d'accueil (330a) à la première unité de traitement de contenants (350),
transport du premier contenant au moyen de l'élément de transport (310a-310d) le long de la voie de transport, de la première unité de traitement de contenants (350) à un premier point d'évacuation (340a),
évacuation du premier contenant par l'élément de transport (310a-310d), au niveau du premier point d'évacuation (340a),
**caractérisé par** les étapes suivantes :
retour de l'élément de transport (310a-310d) au premier point d'accueil (330a), comprenant :
l'accueil d'au moins un deuxième contenant au niveau d'un deuxième point d'accueil (330b) par l'élément de transport (310a-310d),
le transport du deuxième contenant au moyen de l'élément de transport (310a-310d) le long de la voie de transport (300), du deuxième point d'accueil (330b) à la deuxième unité de traitement de contenants (360),
le transport du deuxième contenant au moyen de l'élément de transport (310a-310d) le long de la voie de transport (300), de la deuxième unité de traitement de contenants (360) à un deuxième point d'évacuation (340b), et
l'évacuation du deuxième contenant par l'élément de transport (310a-310d), au niveau du deuxième point d'évacuation (340b),
l'élément de transport (310a-310d) étant mené et guidé du point d'accueil au point d'évacuation en étant commandé individuellement.

10. Procédé de transport selon la revendication 9, d'après lequel l'élément de transport (310a-310d) est, en fonction d'un état de fonctionnement et/ou d'un débit de la deuxième unité de traitement de contenants (360), ramené directement du premier point d'évacuation (340a) au premier point d'accueil (330a).
